# EUROPÄISCHE PATENTANMELDUNG

(11) **EP 2 857 639 A1**
(43) Veröffentlichungstag der Anmeldung: **08.04.2015**
(21) Anmeldenummer: 13186869.7
(22) Anmeldetag: 01.10.2013
(51) Int. Cl.: F01D 11/00, F01D 11/02, F16J 15/44

(54) **Dichtungsring**

(71) Anmelder: Siemens Aktiengesellschaft, 80333 München (DE)
(72) Erfinder: Bell, Ralf, 45478 Mülheim an der Ruhr (DE); Böer, Isabell, 45479 Mülheim an der Ruhr (DE); Fischer, Thomas, 45479 Mülheim an der Ruhr (DE); Gaio, Giuseppe, 53173 Bonn (DE); Heinze, Raimund, 46049 Oberhausen (DE); Legenbauer, Markus, 45279 Essen (DE); Razowski, Damian, 45473 Mülheim an der Ruhr (DE); Riedel, Thomas, 45481 Mülheim an der Ruhr (DE); Ruda, Stanislaw, 47447 Moers (DE); Ziwes, Ralf, 46539 Dinslaken (DE)

(57) **Zusammenfassung**

Die Erfindung betrifft einen Dichtungsring (1), der aus zumindest zwei Ringsegmenten (2) zusammengesetzt ist, wobei der Dichtungsring (1) an seiner Innenfläche (10) eine Vielzahl von axial benachbart angeordneten, radial vorstehenden und umlaufend ausgebildeten Dichtspitzen (11) aufweist und an seiner Außenfläche (13) mit Befestigungsmitteln (14a, 14b, 16) versehen ist, die zur Befestigung der Ringsegmente (2) an einem feststehenden Teil (7) einer rotierenden Maschine ausgelegt sind.

## Beschreibung

Die vorliegende Erfindung betrifft einen Dichtungsring, eine Dampfturbine mit einem Stator und einem Rotor, wobei der Stator zumindest eine umlaufende Ringnut aufweist, in die ein Dichtungsring eingesetzt ist, die Verwendung eines Dichtungsringes zur Abdichtung eines zwischen einem Stator und einem Rotor einer Dampfturbine vorhandenen Ringspalts sowie ein Verfahren zum Warten einer zumindest einen solchen Dichtungsring aufweisenden Dampfturbine.

In Dampfturbinen werden Dichtungen über den Laufschaufeln eingesetzt, um die wirkungsgradschädliche Spaltströmung zu reduzieren. In Niederdruckturbinen kommt es aufgrund der Nassdampfströmung zu Erosionserscheinungen an den Dichtungen, was auch als Erosionskorrosion bezeichnet wird. Hierdurch kann es zur Ablösung der Dichtungen kommen, womit ein Wirkungsgradabfall verbunden ist. Darüber hinaus können abgelöste Dichtungsteile Schäden an anderen Bauteilen der Turbine verursachen, wie beispielsweise an den Kondensatorrohren oder den Laufschaufeln. Der Umfang der Erosionskorrosion ist im Wesentlichen abhängig von dem Material der Dichtung, der Dampfreinheit und der Fahrweise der Turbine. Eine exakte Vorhersage der Erosionskorrosion ist bislang allerdings nicht möglich.

Als Dichtungen in Dampfturbinen werden zur Reduzierung der Spaltströmung normalerweise sogenannte Dichtbänder eingesetzt, die in Dichtbandnuten eingestemmt werden, welche direkt im Leitschaufelträger oder Leitschaufelkranz ausgebildet sind, die einen Teil des Stators bilden. Durch entsprechende Auswahl des Dichtbandmaterials und/oder durch Beschichten der Dichtbänder mit erosionsbeständigen Materialien wird dem Verschleiß durch Erosionskorrosion entgegengewirkt. Beide Alternativen sind allerdings mit sehr hohen Kosten verbunden. Im Rahmen von in vorbestimmten Wartungsintervallen durchgeführten Wartungsarbeiten wird der Umfang des Verschleißes der Dichtungsbänder regelmäßig geprüft. Im Falle von Verschleiß werden die betroffenen Stellen dann aufwendig saniert. Hierzu sind kostenintensive Sonderwerkzeugmaschinen erforderlich. Teilweise ist auch eine Reparatur in einer Werkstatt unumgänglich, was mit viel Aufwand und Zeit sowie mit langen Stillstandszeiten einhergeht.

Ausgehend von diesem Stand der Technik ist es eine Aufgabe der vorliegenden Erfindung, einen Dichtungsring der eingangs genannten Art, eine Dampfturbine mit zumindest einem solchen Dichtungsring sowie ein Verfahren zum Warten einer zumindest einen solchen Dichtungsring aufweisenden Dampfturbine zu schaffen, bei denen Kosten, Aufwand und Stillstandszeiten reduziert sowie die Planungssicherheit erhöht werden.

Zur Lösung dieser Aufgabe schafft die vorliegende Erfindung einen Dichtungsring, der aus zumindest zwei Ringsegmenten zusammengesetzt ist, wobei der Dichtungsring an seinen Innenfläche eine Vielzahl von axial benachbart angeordneten, radial vorstehenden und umlaufend ausgebildeten Dichtspitzen aufweist und an seiner Außenfläche mit Befestigungsmitteln versehen ist, die zur Befestigung der Ringsegmente an einem feststehenden Teil bzw. Stator einer rotierenden Maschine ausgelegt sind. Ein wesentlicher Vorteil des erfindungsgemäßen Dichtungsrings besteht darin, dass sich dieser aufgrund der Segmentierung problemlos montieren und demontieren lässt. Somit kann der Dichtungsring im Rahmen von Wartungsarbeiten im Falle eines Verschleißes problemlos ausgetauscht werden. Entsprechend kann auf teure und zeitaufwendige Reparaturarbeiten vollständig verzichtet werden, womit Kosten, Aufwand und Stillstandszeiten reduziert und die Planungssicherheit erhöht werden. Darüber hinaus kann der Dichtungsring aufgrund der Tatsache, dass er lediglich das vorbestimmte Wartungsintervall überdauern muss, aus einem vergleichsweise preiswerten Material hergestellt werden, wodurch weitere Kosten eingespart werden können. Geeignete Material für den erfindungsgemäßen Dichtungsring sind insbesondere S235JR, P265GH, X3CRNIMO13-4, X22CRMOV12-1 oder 16MO3, um nur einige Beispiele zu nennen.

Gemäß einer Ausgestaltung der vorliegenden Erfindung sind sämtliche Ringsegmente baugleich ausgeführt, wodurch insbesondere die Fertigung und Montage des Dichtungsringes erleichtert und kostengünstig gestaltet werden.

Vorteilhaft ist/sind die Anzahl und/oder die Anordnung der Ringsegmente derart gewählt, dass der Dichtungsring im Wesentlichen mittig geteilt werden kann. Dies erleichtert die Montage und Demontage des Dichtungsringes bei Dampfturbinen mit mittig geteiltem Stator erheblich.

Bevorzugt ist zwischen den Stoßflächen benachbart angeordneter Ringsegmente in Umfangsrichtung ein definierter Spalt vorhanden. Ein solcher Spalt lässt Wärmebewegungen der Ringsegmente in Umfangsrichtung zu.

Gemäß einer Ausgestaltung der vorliegenden Erfindung sind die Stoßflächen benachbart angeordneter Ringsegmente zumindest teilweise quer zur axialen Richtung angeordnet. Dies hat den Vorteil, dass wirkungsgradschädliche Spaltströmungen zwischen den Stoßflächen verhindert werden.

Gemäß einer Variante der vorliegenden Erfindung erstrecken sich die Stoßflächen benachbart angeordneter Ringsegmente in einem Winkel α schräg zur axialen Richtung, wobei der Winkel α bevorzugt im Bereich von 30 bis 60° liegt.

Alternativ können die Stoßflächen auch gestuft ausgebildet sein.

Die benachbart angeordneten Dichtspitzen weisen gemäß einer Ausgestaltung der vorliegenden Erfindung eine Sägezahnkontur auf.

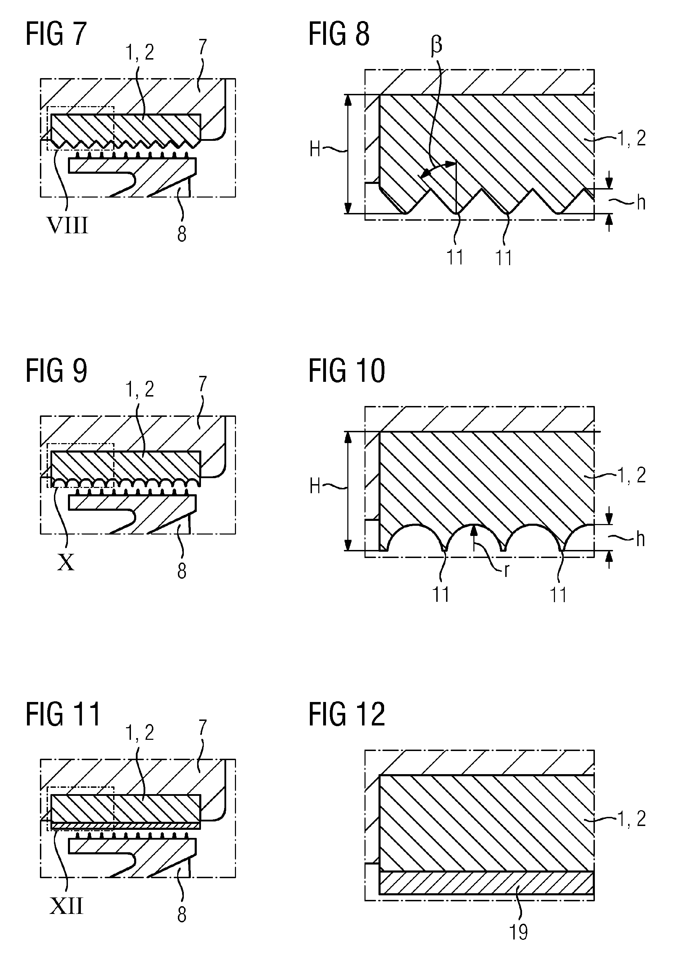

Gemäß einer weiteren Ausgestaltung der vorliegenden Erfindung weisen die benachbart angeordneten Dichtspitzen eine Halbringkontur auf, wie sie beispielsweise in Figur 9 dargestellt ist.

Eine weitere Alternative besteht darin, dass die Ringsegmente zumindest entlang der radial einwärts weisenden Bereiche eine sogenannte Honigwabendichtung aufweisen, deren Waben bzw. Öffnungen radial einwärts weisen und im bestimmungsgemäßen Zustand Verwirbelungen erzeugen, durch die eine Dichtwirkung erzielt wird. Die Öffnungen sind bevorzugt mehreckig ausgebildet, wobei sie grundsätzlich auch eine runde oder ovale Form aufweisen können.

Die Befestigungsmittel sind bevorzugt in Form schwalbenschwanzartig ausgebildeter Vorsprünge vorgesehen, die im bestimmungsgemäßen Zustand in eine korrespondierende Ringnut eingreifen, die an dem Stator der Maschine ausgebildet ist oder umgekehrt. Mit anderen Worten können die Befestigungsmittel auch in Form schwalbenschwanzartig ausgebildeter Nuten vorgesehen sein, in die im bestimmungsgemäßen Zustand korrespondierende Vorsprünge eingreifen, die an dem Stator der Maschine ausgebildet sind. Solche schwalbenschwanzartig ausgebildete Befestigungsmittel bieten einen sicheren Halt und erleichtern die Montage und Demontage des Dichtungsrings.

Gemäß einer Variante der vorliegenden Erfindung sind Befestigungsmittel alternativ oder zusätzlich in Form von Befestigungsschrauben vorgesehen, die sich durch in den Ringsegmenten ausgebildete Durchgangslöcher erstrecken und radial auswärts von der Außenfläche des Dichtungsrings vorstehen. Die Befestigungsschrauben werden im bestimmungsgemäßen Zustand dann in korrespondierend ausgebildete und angeordnete Gewindebohrungen des Stators geschraubt.

Zur Lösung der eingangs genannten Aufgabe schafft die vorliegende Erfindung ferner eine Dampfturbine mit einem Stator und einem Rotor, wobei der Stator zumindest eine umlaufende Ringnut aufweist, in der ein erfindungsgemäßer Dichtring aufgenommen ist, wobei die Ringnut Haltemittel aufweist, die zur Fixierung des Dichtrings mit dessen Befestigungsmitteln zusammenwirken.

Ferner betrifft die vorliegende Erfindung die Verwendung eines erfindungsgemäßen Dichtrings zur Abdichtung eines zwischen einem Stator und einem Rotor einer Dampfturbine vorhandenen Ringspalts, wobei der Dichtungsring am Stator befestigt wird.

Zur Lösung der eingangs genannten Aufgabe schafft die vorliegende Erfindung darüber hinaus ein Verfahren zum Warten einer zumindest einen erfindungsgemäßen Dichtring aufweisenden Dampfturbine, das nach Ablauf eines vorbestimmten Wartungsintervalls durchgeführt wird, wobei der zumindest eine Dichtungsring im Falle von Verschleiß durch einen neuen erfindungsgemäßen Dichtungsring ausgetauscht wird. Alternativ kann der Dichtungsring aber auch ohne vorherige Prüfung auf Verschließ ausgetauscht werden.

Weitere Merkmale und Vorteile der vorliegenden Erfindung werden anhand der nachfolgenden Beschreibung von Ausführungsformen erfindungsgemäßer Dichtungsringe unter Bezugnahme auf die beiliegende Zeichnung deutlich. Darin ist
Figur 1 eine schematische Vorderansicht eines Dichtungsrings gemäß einer Ausführungsform der vorliegenden Erfindung;
Figur 2 eine Teildraufsicht in Richtung des Pfeils A in Figur 1, welche die Stoßflächen zweier benachbart angeordneter Ringsegmente des Dichtungsringes gemäß einer ersten Variante der vorliegenden Erfindung zeigt;
Figur 3 eine Teildraufsicht in Richtung des Pfeils A in Figur 1, welche die Stoßflächen benachbart angeordneter Ringsegmente des Dichtungsringes gemäß einer zweiten Variante zeigt;
Figur 4 eine geschnittene Teilseitenansicht des in Figur 1 dargestellten Dichtungsringes im montierten Zustand, die eine erste Befestigungsvariante des Dichtungsringes zeigt;
Figur 5 eine geschnittene Teilseitenansicht des in Figur 1 dargestellten Dichtungsringes im montierten Zustand, die eine zweite Befestigungsvariante des Dichtungsringes zeigt; und
Figur 6 eine geschnittene Teilseitenansicht des in Figur 1 dargestellten Dichtungsringes, die eine dritte Befestigungsvariante des Dichtungsringes zeigt.
Figur 7 eine geschnittene Teilseitenansicht des in Figur 1 dargestellten Dichtungsringes im montierten Zustand, dessen Dichtspitzen gemäß einer ersten Variante eine Sägezahnkontur aufweisen;
Figur 8 eine vergrößerte Ansicht des in Figur 7 mit dem Bezugszeichen VIII bezeichneten Ausschnitts;
Figur 9 eine geschnittene Teilseitenansicht des in Figur 1 dargestellten Dichtungsringes im montierten Zustand, dessen Dichtspitzen gemäß einer zweiten Variante eine Halbringkontur aufweisen;
Figur 10 eine vergrößerte Ansicht des in Figur 9 mit dem Bezugszeichen X bezeichneten Ausschnitts;
Figur 11 eine geschnittene Teilseitenansicht des in Figur 1 dargestellten Dichtrings, der gemäß einer weiteren Variante entlang seines Innenumfangs mit einer Honigwabendichtung versehen ist;
Figur 12 eine vergrößerte Ansicht des in Figur 11 mit dem Bezugszeichen XII bezeichneten Ausschnitts;

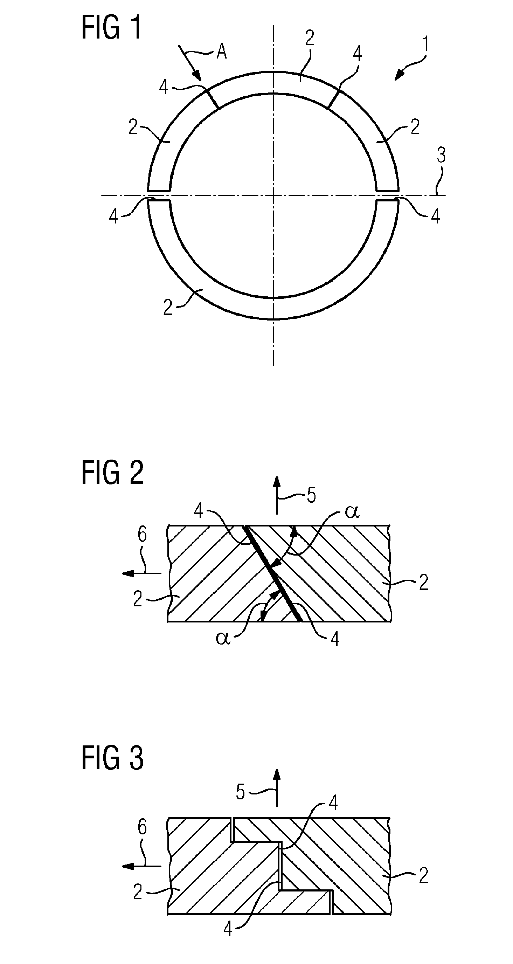

Figur 1 zeigt einen Dichtungsring 1 gemäß einer Ausführungsform der vorliegenden Erfindung. Der Dichtungsring 1 ist aus zumindest zwei Ringsegmenten 2 zusammengesetzt. So kann der Dichtungsring 1, wie es in der unteren Hälfte der Figur 1 beispielhaft dargestellt ist, zwei halbringförmige Ringsegmente 2 aufweisen. Alternativ ist es auch möglich, dass der Dichtungsring 1 aus zum Beispiel sechs Ringsegmenten 2 zusammengesetzt ist, wie es in der oberen Hälfte von Figur 1 gezeigt ist. Sämtliche Ringsegmente 2 sind vorzugsweise baugleich ausgeführt, wodurch die Herstellung vereinfacht wird. Die Anzahl sowie die Anordnung der Ringsegmente 2 ist dabei derart gewählt, dass der Dichtungsring 1 entlang einer Mittellinie 3 vorzugsweise mittig geteilt werden kann. Der Dichtungsring 1 bzw. die Ringsegmente 2 sind vorteilhaft aus S235JR, P265GH, X3CRNIMO13-4, X22CRMOV12-1 oder 16MO3 gefertigt, um nur einige Beispiele zu nennen. Ferner können die Ringsegmente 2 mit einem korrosionsbeständigen Material beschichtet sein, wobei eine solche Beschichtung jedoch nicht obligatorisch ist.

Es sei darauf hingewiesen, dass die Anzahl der Ringsegmente 2 grundsätzlich frei wählbar ist, wobei eine gerade Anzahl von Ringsegmenten 2 bevorzugt wird.

Figur 2 zeigt eine erste Ausbildungsvariante der Stoßflächen 4 benachbart angeordneter Ringsegmente 2, gemäß der sich die Stoßflächen 4 in einem Winkel α schräg zur axialen Richtung 5 erstrecken, wobei die Stoßflächen 4 in Umfangsrichtung 6 um ein vorbestimmtes Maß voneinander beabstandet sind.

Figur 3 zeigt eine weitere Ausbildungsvariante der Stoßflächen 4 benachbart angeordneter Ringsegmente 2, bei der die Stoßflächen 4 in axialer Richtung 5 gestuft ausgebildet sind, wobei auch hier die jeweiligen Stoßflächen 4 der Ringsegmente 2 in Umfangsrichtung 6 in einem vorbestimmten Abstand zueinander angeordnet sind.

Dadurch, dass die Stoßflächen 4 benachbart angeordneter Ringsegmente 2 gemäß den Figuren 2 und 3 zumindest teilweise quer zur axialen Richtung 5 angeordnet sind, ist dahingehend von Vorteil, werden im bestimmungsgemäß angeordneten Zustand des Dichtungsrings 1 wirkungsgradschädliche Spaltströmungen zwischen den Stoßflächen 4 verhindert. Das zwischen den Stoßflächen 4 in Umfangsrichtung 6 belassene Spaltmaß gestattet im bestimmungsgemäß angeordneten Zustand des Dichtungsrings 1 Wärmebewegungen der Ringsegmente 2 in Umfangsrichtung 6.

Es sollte klar sein, dass weitere Varianten der Ausbildung der Stoßflächen 4 benachbart angeordneter Ringsegmente 2 möglich sind, bei denen durch Versatz der Stoßfläche 4 in Bezug auf die axiale Richtung 5 Spaltströmungen zwischen den Stoßflächen 4 wirksam verhindert werden.

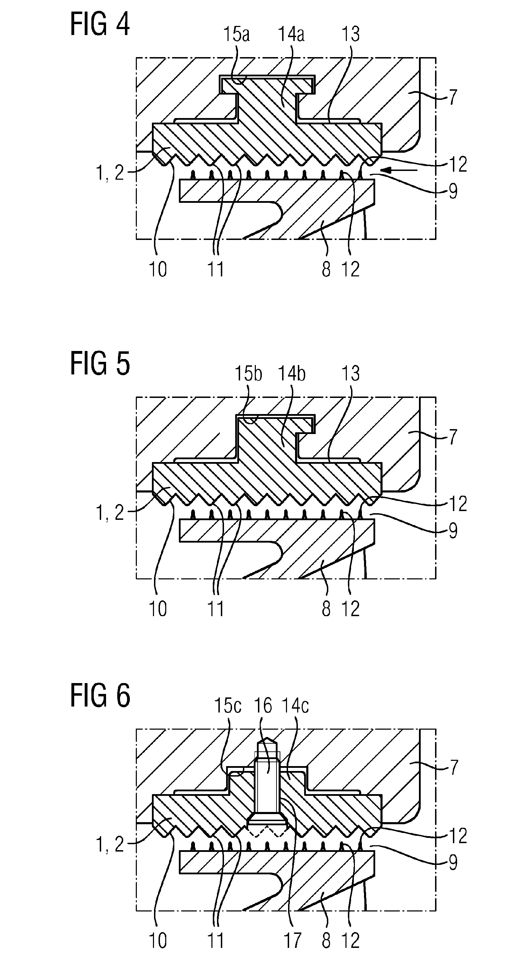

Figur 4 zeigt eine erste Befestigungsvariante des Dichtungsringes 1 im montierten Zustand. Gemäß Figur 4 ist der Dichtungsring 1 an einem Stator 7 einer Dampfturbine gegenüber einem Rotor 8 gehalten und dient dazu, einen zwischen dem Stator 7 und dem Rotor 8 vorhandenen Ringspalt 9 abzudichten. An der Innenfläche 10 der Ringsegmente 2 bzw. des Dichtungsrings 1 ist eine Vielzahl von axial benachbart angeordneter, radial vorstehender und umlaufend ausgebildeter Dichtspitzen 11 angeordnet, wobei die Dichtspitzen 11 in bekannter Weise mit Dichtspitzen 12 des Rotors 8 zusammenwirken können, die radial vorstehend und umlaufend am Außenumfang des Rotors 8 ausgebildet sind. Der Rotor 8 kann, muss allerdings nicht, mit Dichtungsspitzen 12 versehen sein. An der Außenfläche 13 der Ringsegmente 2 sind Befestigungsmittel vorgesehen, die zur Befestigung der Ringsegmente 2 an dem Stator 7 dienen. Vorliegend sind die Befestigungsmittel in Form schwalbenschwanzartig ausgebildeter Vorsprünge 14a vorgesehen, die in eine korrespondierend ausgebildete Ringnut 15a eingreifen, die an dem Stator 7 ausgebildet ist. Die Ringnut 15a ist gegenüber den schwalbenschwanzartig ausgebildeten Vorsprüngen 14a mit einem Übermaß ausgebildet, das es gestattet, die Ringsegmente 2 innerhalb der Ringnut 15a zu verschieben.

Figur 5 zeigt eine Anordnung analog zu Figur 4, bei der die Befestigungsmittel der Ringsegmente 2 als im Querschnitt betrachtet im Wesentlichen L-förmige Vorsprünge 14b ausgebildet sind und in einer korrespondierend geformten Ringnut 15b aufgenommen sind. Auch hier ist die Ringnut 15b mit einem Übermaß ausgebildet, das ein Verschieben der Ringsegmente 2 gestattet.

Figur 6 zeigt eine Anordnung analog zu Figur 4, bei der die Befestigungsmittel in Form von hinterschneidungsfreien Vorsprüngen 14c ausgebildet sind, die in einer korrespondierenden mit einem Übermaß ausgebildeten Ringut 15c aufgenommen sind, wobei zur Fixierung der Ringsegmente 2 an dem Stator 7 Befestigungsschrauben 16 dienen, die in sich durch die Ringsegmente 2 erstreckenden Durchgangslöchern 17 aufgenommen und in am Stator 7 ausgebildete Gewindebohrungen 18 geschraubt sind.

Die Figuren 7 und 8 zeigen eine erste Ausbildungsvariante der Dichtspitzen 11 der Ringsegmente 2. Bei dieser Variante weisen die Dichtspitzen 11 eine Sägezahnkontur auf. Die Höhe H der Ringsegmente 2 liegt vorliegend im Bereich zwischen 10 und 30 mm. Der eingezeichnete Winkel β kann zwischen 0 und 120° liegen. Die Höhe h der Dichtspitzen 11 beträgt vorliegend zwischen 2 und 5 mm.

Die Figuren 9 und 10 zeigen eine zweite Ausbildungsvariante der Dichtspitzen 11 der Ringsegmente 2. Bei dieser Variante weisen die benachbart angeordneten Dichtspitzen 11 eine Halbringkontur auf. Die Höhe H der Ringsegmente 2 liegt auch hier im Bereich zwischen 10 und 30 mm. Der Radius r kann vorliegend zwischen 1 und 10 mm betragen.

Die Figuren 11 und 12 zeigen eine dritte Ausbildungsvariante, bei der die Ringsegmente 2 entlang ihrer radial einwärts weisenden Bereiche eine Honigwabendichtung 19 aufweisen, deren Waben bzw. Öffnungen, die in den Figuren nicht dargestellt sind, radial einwärts weisen. Die Öffnungen sind bevorzugt mehreckig ausgebildet, wobei sie grundsätzlich auch eine runde oder ovale Form aufweisen können.

Ein wesentlicher Vorteil des erfindungsgemäßen Dichtungsringes 1 besteht darin, dass dieser aufgrund der Segmentierung problemlos montiert und demontiert werden kann. Somit kann der Dichtungsring 1 im Rahmen von Wartungsarbeiten im Falle eines Verschleißes problemlos ausgetauscht werden. Entsprechend kann auf teure und zeitaufwendige Reparaturarbeiten vollständig verzichtet werden, womit Kosten, Aufwand und Stillstandzeiten reduziert und die Planungssicherheit erhöht werden. Aufgrund der Tatsache, dass die Ringsegmente 2 baugleich ausgeführt sind, können Fertigung und Montage einfach gestaltet werden. Die mittige Teilung des Dichtungsringes 1 erleichtert die Montage und Demontage des Dichtungsringes 1 bei Dampfturbinen mit mittig geteiltem Stator bzw. Gehäuse. Ist der Stator 7 mittig geteilt, so wird auch die Nut 15 in zwei Teilnuten unterteilt, die unabhängig voneinander mit den Ringsegmenten 2 bestückt werden können. Ebenso ist die Entnahme der Ringsegmente 2 aus den Teilnuten problemlos möglich.

Bei Wartungsarbeiten, die in vorbestimmten Wartungsintervallen durchgeführt werden, wird der Dichtungsring 1 erfindungsgemäß im Falle von Verschleiß einfach durch einen neuen Dichtungsring 1 ausgetauscht werden. Aufgrund des regelmäßigen Austauschs des Dichtungsringes 1 kann dieser aus einem vergleichsweise preiswerten Material hergestellt werden, da er lediglich das vorbestimmte Wartungsintervall überdauern muss.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Dichtungsring (1), der aus zumindest zwei Ringsegmenten (2) zusammengesetzt ist, wobei der Dichtungsring (1) an seiner Innenfläche (10) eine Vielzahl von axial benachbart angeordneten, radial vorstehenden und umlaufend ausgebildeten Dichtspitzen (11) aufweist und an seiner Außenfläche (13) mit Befestigungsmitteln (14a, 14b, 16) versehen ist, die zur Befestigung der Ringsegmente (2) an einem feststehenden Teil (7) einer rotierenden Maschine ausgelegt sind.

2. Dichtungsring (1) nach Anspruch 1,
**dadurch gekennzeichnet, dass**
sämtliche Ringsegmente (2) baugleich ausgeführt sind.

3. Dichtungsring (1) nach einem der vorhergehenden Ansprüche,
**dadurch gekennzeichnet,**
**dass** die Anzahl und/oder die Anordnung der Ringsegmente (2) derart gewählt ist/sind, dass der Dichtungsring (1) im Wesentlichen mittig geteilt werden kann.

4. Dichtungsring (1) nach einem der vorhergehenden Ansprüche,
**dadurch gekennzeichnet, dass**
zwischen den Stoßflächen (4) benachbart angeordneter Ringsegmente (2) in Umfangsrichtung (6) ein definierter Spalt vorhanden ist.

5. Dichtungsring (1) nach einem der vorhergehenden Ansprüche,
**dadurch gekennzeichnet, dass**
die Stoßflächen (4) benachbart angeordneter Ringsegmente (2) zumindest teilweise quer zur axialen Richtung (5) angeordnet sind.

6. Dichtungsring (1) nach Anspruch 5,
**dadurch gekennzeichnet, dass**
sich die Stoßflächen (4) benachbart angeordneter Ringsegmente (2) in einem Winkel α schräg zur axialen Richtung erstrecken, wobei der Winkel α bevorzugt im Bereich von 30 bis 60° liegt.

7. Dichtungsring (1) nach Anspruch 5,
**dadurch gekennzeichnet, dass**
die Stoßflächen (4) gestuft ausgebildet sind.

8. Dichtungsring (1) nach einem der vorhergehenden Ansprüche, **dadurch gekennzeichnet, dass** die benachbart angeordneten Dichtspitzen (11) eine Sägezahnkontur aufweisen.

9. Dichtungsring (1) nach einem der Ansprüche 1 bis 7, **dadurch gekennzeichnet, dass**
die benachbart angeordneten Dichtspitzen (11) eine Halbringkontur aufweisen.

10. Dichtungsring (1) nach einem der 1 bis 7,
**dadurch gekennzeichnet, dass**
die Ringsegmente entlang der radial einwärts weisenden Bereiche eine Honigwabendichtung aufweisen.

11. Dichtungsring (1) nach einem der vorhergehenden Ansprüche, **dadurch gekennzeichnet, dass** die Befestigungsmittel in Form schwalbenschwanzartig ausgebildeter Vorsprünge (14a) vorgesehen sind, die im bestimmungsgemäßen Zustand in eine korrespondierende Ringnut (15a) eingreifen, die an dem Stator der Maschine ausgebildet ist, oder umgekehrt.

12. Dichtungsring (1) nach einem der Ansprüche 1 bis 10,
**dadurch gekennzeichnet, dass**
die Befestigungsmittel (14) in Form L-förmig ausgebildeter Vorsprünge (14b) vorgesehen sind, die im bestimmungsgemäßen Zustand in eine korrespondierende Ringnut (15b) eingreifen, die an dem feststehenden Teil (7) der Maschine ausgebildet ist, oder umgekehrt.

13. Dichtungsring (1) nach einem der vorhergehenden Ansprüche,
**dadurch gekennzeichnet, dass**
dieser zumindest teilweise mit einer erosionsbeständigen Beschichtung versehen ist.

14. Dichtungsring (1) nach einem der vorhergehenden Ansprüche,
**dadurch gekennzeichnet, dass**
die Befestigungsmittel (14) in Form von Befestigungsschrauben (16) vorgesehen sind, die sich durch in den Ringsegmenten (11) ausgebildete Durchgangslöcher (17) erstrecken und radial auswärts von der Außenfläche (13) des Dichtungsrings (1) vorstehen.

15. Dampfturbine mit einem Stator (7) und einem Rotor (8),
wobei der Stator (7) zumindest eine umlaufende Ringnut (15a, 15b, 15c) aufweist, in der ein Dichtungsring (1) nach einem der vorhergehenden Ansprüche aufgenommen ist, wobei die Ringnut (15a, 15b, 15c) Haltemittel aufweist, die zur Fixierung des Dichtrings (11) mit dessen Befestigungsmitteln (14a, 14b, 16) zusammenwirken.

16. Verwendung eines Dichtungsrings (1) nach einem der Ansprüche 1 bis 12 zur Abdichtung eines zwischen einem Stator (7) und einem Rotor (8) einer Dampfturbine vorhandenen Ringspalts (9), wobei der Dichtungsring (1) am Stator (7) befestigt wird.

17. Verfahren zum Warten einer zumindest einen Dichtungsring (1) nach einem der Ansprüche 1 bis 14 aufweisenden Dampfturbine, das nach Ablauf eines vorbestimmten Wartungsintervalls durchgeführt wird, **dadurch gekennzeichnet, dass** der zumindest eine Dichtungsring (1) im Falle von Verschleiß durch einen neuen Dichtungsring (1) nach einem der Ansprüche 1 bis 12 ausgetaucht wird.
